Europäisches Patentamt

European Patent Office

Office européen des brevets

(19)

(11) **EP 0 787 768 B1**

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(51) Int Cl.⁷: $C08L\ 19/00$, $H01B\ 3/30$

(21) Anmeldenummer: **97101360.2**

(22) Anmeldetag: **29.01.1997**

(54) **Zwei-Komponenten-Kabelvergussmasse**

Two-component cable sealing composition

Masse coulable pour câble à deux composants

(84) Benannte Vertragsstaaten:
**BE CH DE DK IT LI LU NL**
Benannte Erstreckungsstaaten:
**SI**

(30) Priorität: **02.02.1996 DE 19603772**

(43) Veröffentlichungstag der Anmeldung:
**06.08.1997 Patentblatt 1997/32**

(73) Patentinhaber: PAUL JORDAN
**ELEKTROTECHNISCHE FABRIK, GmbH & Co.
D-12249 Berlin (DE)**

(72) Erfinder:
• **Seidel, René**
  **12359 Berlin (DE)**
• **Özsan, Murat**
  **13581 Berlin (DE)**

(74) Vertreter:
**Strych, Werner Maximilian Josef, Dr. et al
Hansmann & Vogeser,
Patent- und Rechtsanwälte,
Albert-Rosshaupter-Strasse 65
81369 München (DE)**

(56) Entgegenhaltungen:
**EP-A- 0 356 715          DE-A- 4 219 359**

**Beschreibung**

Die Erfindung betrifft eine in der Wärme und/oder Kälte vernetzbare Kabelvergußmasse gemäß dem Oberbegriff des Anspruchs 1 sowie deren Verwendung gemäß Anspruch 3.

Bei unterirdisch zu verlegenden Hausanschlüssen und ungeschützen Witterungseinflüssen ausgesetzten Kabelabzweigungen der Straßenbeleuchtung oder Erdverlegung, werden in der Regel Elektromuffen eingesetzt, d. h. aus widerstandsfähigen Materialen wie temperaturbeständigem Kunststoff bestehende Gehäuse, in die Kabelstränge hineingeführt werden, um innerhalb der schützenden Gehäuse Kabelabzweigungen, Sicherungen oder dgl. anzubringen.

Zwingende Voraussetzung ist es dabei, daß die Klemmstellen innerhalb der Gehäuse zuverlässig vor schädlichen Umwelteinflüssen wie Feuchtigkeit, Erosion oder dgl. geschützt werden. Die kritischen Stellen sind dabei die Fugen zwischen den Muffenteilen einerseits und die Kabeleingänge andererseits und zwar nicht nur im Hinblick auf die Dichtigkeit gegenüber Umwelteinflüssen, sondern auch zur Auftrechterhaltung der Dichtigkeit von innen nach außen, wobei diese Muffen zum Schutz der Klemmstellen nach fertiger Montage mit zähflüssigen oder auch chemisch aushärtenden Substanzen bzw. Substanzgemischen ausgegossen werden.

Dabei ist es bekannt, daß nicht-aushärtende Vergußmassen aufgrund ihrer unterschiedlichen physikalischen Eigenschaften der in ihnen verwendeten Einzelkomponenten im Laufe der Zeit leichte Sedimentationserscheinungen zeigen, wobei der Füllstoffanteil der Masse sich absetzt und die Bindemittelkomponente freigesetzt wurde, wobei es zu Undichtigkeiten oder dgl. kommt.

Um diese vom Verbraucher für nachteilig erachteten Erscheinungen zu beseitigen, wurden der Füllstoff- und Bindemittelkomponente Vernetzungsmittel wie Amine oder Säuren als Katalysator zugegeben, wobei jedoch die Handhabung und somit die Umweltverträglichkeit des Produkts nicht mehr uneingeschränkt gegeben ist.

Aus der EP-A-0 183 923 ist ein Verfahren zur Herstellung von Kabelvergußmassen bekannt, bei dem ein im wesentlichen aus einem Erdalkalicarbonat bestehender Füllstoff, eine Bindemittelkomponente und ggf. übliche Zusatzstoffe miteinander vermischt werden. Bei der bekannten bestehenden Kabelvergußmasse ist die Bindemittelkomponente eine Kombination von zwei unterschiedlichen Bindemitteln.

Die DE-A-42 19 359 beschreibt eine in Wärme und/oder Kälte vergießbare Kabelvergußmasse aus zumindest einer Bindemittelkomponente und einer Füllstoffkomponente, sowie ein Verfahren zu ihrer Herstellung.

Die vorstehend beschriebenen Kabelvergußmassen sind jedoch noch insofern unbefriedigend, als bei ihrer Aushärtung noch Wasser an die Klemmstellen treten kann und somit Kurzschlüsse oder Korrosion im Laufe der Zeit eintreten können.

Aufgabe der Erfindung ist es daher, eine Kabelvergußmasse bereitzustellen, die leicht herstellbar ist, akzeptable Lagerfähigkeit aufweist und neben ihren umweltfreundlichen Eigenschaften eine verkürzte Aushärtzeit aufweist.

Erfindungsgemäß wird diese Aufgabe durch die Merkmale des Anspruchs 1 gelöst. Bevorzugte Weiterbildungen der Erfindung sind den Unteransprüchen zu entnehmen.

Gemäß der Erfindung ist die vernetzte Kabelvergußmasse das Reaktionsprodukt einer A-Komponente aus 15 bis 25 Gew.-% eines Streckmittels von niedrigviskosen, nicht hygroskopischen Mineralölen, 21 bis 29 Gew.-% eines hydroxylfunktionalisierten Polybutadiens mit einem Molekulargewicht (Mn) von 2600 bis 2300 und einer Jodzahl von 400 bis 600 als Bindemittel, 46 bis 58 Gew.-% eines aus Oxiden, Hydroxiden und Carbonaten der Erdalkalimetalle ausgewählten Füllstoffes, und 0,65 bis 1,3 Gew.-% eines organischen Titanats als Vernetzer mit einer B-Komponente aus 7,5 bsi 15 Gew.-% eines Streckmittels von niedrig-viskosen, nicht hygroskopischen Mineralölen, 85 bis 95 Gew.-% eines carboxylfunktionalisierten Polybutadiens als Bindemittel und 0,05 bis 1,6 Gew.-% einer Farbpaste.

Insbesondere enthält die erfindungsgemäße in der Wärme und/oder Kälte vernetzbare Zwei-Komponenten-Kabelvergußmasse in der A-Komponente 18 bis 21 Gew.% des Streckmittels, 24 bis 27 Gew.-% des hydroxylfunktionalisierten Polybutadiens als Bindemittel, 49 bis 55 Gew.-% des Füllstoffes und in der B-Komponente 9 bis 12,5 Gew.-% des Streckmittels, 88 bis 93 Gew.-% des carboxylfunktionalisierten Polybutadiens als Bindemittel und 0,05 bis 0,5 Gew.-%, insbesondere 0,1 Gew.-% der Farbpaste.

Da hier der Reaktionsablauf nicht auf Säure-/Aminbasis als Katalysator, sondern auf katalysatorgesteuerter Carboxyl-/Hydroxylvernetzung beruht, entsteht als Endprodukt eine Kabelvergußmasse mit vorstehend genannten Substanzen von nicht umweltbelastenden Eigenschaften.

Zu diesem Vorteil der erfindungsgemäßen Kabelvergußmasse treten auch noch ihre leichte und gefahrlose Verarbeitung, ihre ausgezeichneten elektrischen Isolationseigenschaften wie hohe Durchschlagsspannungswerte, hydrophobes Verhalten und somit ihre feuchtigkeitsabweisende und damit korrosionsschützende Wirkung hinzu.

Neben den vorstehenden Eigenschaften zeichnet sich die erfindungsgemäße Kabelvergußmasse auch durch eine hohe Beständigkeit gegen Mikroben und Alterung aus und - da die Kabelvergußmasse im wesentlichen keine umweltbelastenden Stoffe enthält - auch durch ihre einfache Entsorgung.

Erfindungsgemäß hat es sich als vorteilhaft erwiesen, die A-Komponente und die B-Komponente in einem Mischungsverhältnis von A zu B von im wesentlichen 3:1 einzusetzen. Dies hat den Vorteil, daß ohne komplizierte Wiege- und Meßeinrichtungen die Verarbeitbarkeit, insbesondere die Vermischbarkeit der Kabelvergußmasse auch im Außen-, Erd- oder im Hochbaubetrieb leicht erfolgen kann.

Als für die Zwecke der Erfindung geeignet hat es sich gezeigt, das Gewichtsverhältnis der Erdalkaliverbindung (E) (Füllstoff) zum hydroxylterminierten Polybutadien (HP) der A-Komponente unter Berücksichtigung anderer Reaktionspartner so einzustellen, so daß es der Formel I

$$E > HP \qquad\qquad (I)$$

genügt. Bei Einstellung der vorstehend genannten Mischung auf das genannte Gewichtsverhältnis zeigt das Gemisch eine sehr niedrige Viskosität und ausreichende Thixotropie, wobei ca. 10 Minuten nach dem Zusammenbringen der A-Komponente mit der B-Komponente eine Viskositätserhöhung und damit der Gelierungsprozeß beginnt und innerhalb weniger Tage eine Vergußmasse mit reversibler Dehnbarkeit gebildet wird. Gemäß einer bevorzugten Ausführungsform der Erfindung wurde gefunden, daß zum Erreichen der gewünschten Eigenschaften der erfindungsgemäßen Kabelvergußmasse, wie hoher Durchschlagsfestigkeit und somit guter elektrischer Isolationseigenschaften, ausreichender Viskosität und hinreichender Aushärtezeit, das Gewichtsverhältnis des Füllstoffes zum hydroxylterminierten Polybutadien im wesentlichen im Bereich von 3:1, insbesondere von 2:1 liegen sollte.

Zum Erreichen des beabsichtigten Zweckes, d. h. einer leichten Verarbeitbarkeit, einer akzeptablen Lagerzeitstabilität oder dgl., ist erfindungsgemäß vorgesehen, daß in der B-Komponente das Gewichtsverhältnis des Viskositätserniedrigers (VR) (Streckmittel) zum mit Carboxylgruppen modifizierten Polybutadien (CP) der Formel (II)

$$VR < CP \qquad\qquad (II)$$

genügt. Bei Raumtemperatur wird dabei ebenfalls eine niedrigviskose und thixotrope Mischung erzielt, die ausgezeichnete Verarbeitungseigenschaften aufweist. In Verbindung mit der A-Komponente, wie vorstehend beschrieben, ergeben sich gebrauchsfertige, blasenfreie Kabelvergußmassen, die den an sie gestellten Forderungen, wie leichte Verarbeitbarkeit, Nichtangreifbarkeit von Elektromuffen und Kabelummantelungen, inerte Reaktion gegenüber Metallen und Legierungen, genügen und wegen des Fehlens umweltbelastender Stoffe umweltfreundlich sind.

Als für die Erfindung geeignete Streckmittel haben sich im wesentlichen in der Pharma-Industrie eingesetzte Öle gezeigt, die in der Regel die Viskositätserniedrigung und somit die leichtere Verarbeitbarkeit der erfindungsgemäßen A- und B-Komponente gewährleistet. Dabei handelt es sich um sorgfältig ausraffinierte niedrigviskose und umweltfreundliche Mineralöle, die mit den erfindungsgemäß eingesetzten Polybutadienen gut verträglich sowie oxidationsstabil und nicht hygroskopisch sind. Aus Kostengründen und zur Vereinfachung der Handhabbarkeit wird in der Regel sowohl in der Komponente A als auch in der Komponente B das identische Streckmittel eingesetzt. Ein für die Zwecke der Erfindung besonders geeignetes Streckmittel ist handelsüblich erhältlich und weist einen Flammungspunkt von ca. 168°C nach DIN ISO 2592, eine Viskosität von ca. 12 mPas nach DAB 9, eine Dichte von 0,82 g/cm$^3$, einen Anilinpunkt von 100°C nach DIN 51775 auf und ist unlöslich in Wasser und Ethanol und löslich in Ether und Chloroform.

Als für die Erfindung geeignete Füllstoffe haben sich im wesentlichen Oxide, Hydroxide, und Carbonate, z. B. basische Carbonate, der Eralkalimetalle gezeigt, wobei mit Fettsäuren hydrophobiertes, gemahlenes und oberflächenbehandeltes Calciumcarbonat aus Umweltgründen bevorzugt wird. Durch die Oberflächenbehandlung des Calciumcarbonats mit Fettsäuren wird dabei die Verträglichkeit der Kreideteilchen mit den nachfolgend genannten organischen Medien erhöht. Als besonders geeignetes Calciumcarbonat hat sich dabei handelsüblich unter der Bezeichnung EXH-1/SP erhältliches Calciumcarbonat mit einem Gehalt an ≥ 98% Calciumcarbonat gezeigt. Weitere Bestandteile sind ca. 0,4% Magnesiumcarbonat, ca. 0,1 % Eisen(III) oxid und 1% unlösliche HCI. Dieses Calciumcarbonat hat im wesentlichen einen mittleren Teilchendurchmesser (nach Siebanalyse) von ca. 1,4 μm und eine Schüttdichte von 1,5 g/cm$^3$ (ISO 787/10).

Die in der erfindungsgemäßen Kabelvergußmasse eingesetzten hydroxylfunktionalisierten Polybutadiene haben ein Molekulargewicht (Mn) in der Größenordnung von ca. 2600 bis 3200 und eine Iodzahl von ca. 400 bis ca. 600. Vorzugsweise hat daß eingesetzte Polybutadien mit endständigen Hydroxylgruppen ein Mn von ca. 2800 bis ca. 3000 und ein Iodzahl von ca. 400 bis 500 g Iod/100g. Im wesentlichen handelt es sich dabei um handelsüblich erhältliche hydroxylterminierte 1,4-cis Polybutadiene mit einer nach DIN 53018 bei Raumtemperatur bestimmten Viskosität von ca. 5,5 Pas. Wegen ihrer ökologischen Unbedenklichkeit können die vorstehend genannten hydroxylfunktionalisierten Polybutadiene ohne besondere Vorkehrungen eingesetzt werden, da sie den behördlichen Auflagen, insbesondere bei der Bodeneinbringung, hinsichtlich einer Bodenbelastung ausreichend Genüge leisten.

Als das mit Carboxylgruppen modifizierte Polybutadien der B-Komponente werden vorzugsweise mit Carboxylgruppen modifizierte Polybutadiene eines Molekulargewichtes Mn von ca. 1800 bis ca. 2400 g/mol und einer Säurezahl von 65 bis 75 eingesetzt. Die erfindungsgemäß eingesetzten carboxylfunktionalisierten Polybutadiene sind vorzugsweise Maleinsäureanhydridaddukte des niedermolekularen 1,4-cis-Polybutadiens mit einem mittleren Molekulargewicht Mn von ca. 1800 bis 2400 und einer Säurezahl von 65 bis 75 mg KOH/g und handelsüblich erhältlich.

Erfindungsgemäß werden - wie bereits vorstehend aufgeführt - organische Titanate als Vernetzer eingesetzt, die sich hervoragend als Katalysatoren bei Vernetzungen eignen. Handelsüblich erhältliche organische Titanate sind im wesentlichen unbegrenzt einsetzbar, insbesondere auch unter Berücksichtigung der Tatsache, daß aufgrund der schnellen Ausreagierung der A- und B-Komponente ein Freisetzen bzw. Auswaschen dieser Vernetzer auch unter ungünstigen Witterungsbedingungen bei der Verarbeitung nicht möglich ist.

Erfindungsgemäß hat es sich gezeigt , daß ein Triethanolamintitanchelat, d. h. eine Mischung aus Chelaten mit teilweiser Käfigstruktur, eines Molekulargewichts Mn von 462 und einer bei 25°C gemessenen Viskosität von 90 mPas nach Vermischen der A-mit der B-Komponente bei Temperaturen zwischen ca. -10°C bis +35°C eine Gelierung in Abhängigkeit von der Temperatur bereits nach ca. 10 bis 30 Minuten eintritt und die Aushärtung spätestens nach einem Tag abgeschlossen ist.

Die erfindungsgemäß in der B-Komponente eingesetzte Farbpaste ist eine hochviskose Moltoprenpaste und dient im wesentlichen nur der Kontrolle der Homogenität beim Durchmischen der Komponenten.

Die Verarbeitung der erfindungsgemäßen Kabelvergußmasse ist an sich bekannt und erfolgt vorteilhafterweise so, daß die vorstehend erwähnten Bestandteile der A- und B-Komponente in einen Schlauchbeutel gefüllt, voneinander getrennt durch eine Minischelle in einem Mischungsverhältnis von 3:1 zusammengebracht und die erhaltene Masse nach intensivem Kneten vergossen wird, wobei bereits nach ca. 10 bis 30 Minuten nach dem Gießvorgang eine gelierte Masse entsteht, die bereits nach einem Tag weichelastisch ist.

Das die gewünschten Eigenschaften aufweisende Endprodukt ist dabei im wesentlichen blasenfrei.

Die Erfindung wird nachfolgend anhand eines Beispiels näher erläutert.

Zuerst werden 529,1 g eines auf einen mittleren Teilchendurchmesser von ca. 1,4 μm und einer Dichte von 2,7 g/cm$^3$ gemahlenes, oberflächenbehandeltes und mit Fettsäuren hydrophobiertes Calciumcarbonat mit 264,6 g eines hydroxylfunktionalisierten Polybutadiens eines Molekulargewichts von 2800 g/mol, einer Hydroxylzahl von 48 bis 53 mg KOH/g, einer Iodzahl von 460 g Iod/100 g und einer Viskosität bei 25°C von 5 bis 6 Pas, 198,4 g Streckmittel und 7,9 g eines Triethanolamintitanchelats mit einem Molekulargewicht von 462 g/mol als Vernetzer vermischt.

Parallel dazu werden 99,9 g des gleichen Streckmittels mit 899,1 g des durch Anlagerung von Maleinsäureanhydrid an 1,4-cis-Polybutadien erhaltenen carboxylfunktionalisierten Polybutadiens eines Molekulargewichts von ca. 1800 bis 2400, einer Säurezahl von ca. 70 mg KOH/g und einer nach DIN 53018 bei 20°C bestimmten Viskosität von 6 bis 8 Pas bei Raumtemperatur mit 0,1 g einer Farbpaste vermischt.

Jede der Komponenten A oder B blieb für sich niedrigviskos und zeigte ausgezeichnete thixotrope Eigenschaften.

Nach Zusammenbringen der A- und B-Komponente in einem Mischungsverhältnis von 3:1 wurde innerhalb 10 bis 30 Minuten eine bei -10°C bis +35°C gelierte Kabelvergußmasse und, nach einem Tag, eine vernetzte Kabelvergußmasse mit reversibler Dehnbarkeit, hoher elektrischer Durchschlagfestigkeit, akzeptablem Fließverhalten und einer ausgezeichneten Resistenz gegen Mikrobenbefall erhalten.

Die A- sowie B-Komponente wurde nach ihrer Herstellung im Mischer auf ihr Fließverhalten, ihre Durchschlagsfestigkeit und ihre Dichte geprüft. Die gleichen Prüfmethoden wurden anschließend an der aus der vorstehend genannten Kombination hergestellten Kabelvergußmasse durchgeführt.

Die Dichtemessung erfolgte auf volumetrische Weise mittels einer Analysenwaage der Fa. Sartorius und mit Hilfe der Dichtekugel.

Die Durchschlagsfestigkeit wurde mit einem Isolierölprüfautomaten der Fa. HCK nach VDE 0370/IEC 156 bestimmt.

Die Viskosität wurde sowohl rechnerisch als auch experimentell bestimmt, wobei als Modell zur Berechnung die Suspensionstheorie herangezogen wurde, da der Füllstoffanteil nicht aus kugelförmigen Partikeln besteht, sondern eher in Form eines Würfels vorliegt. Durch die Beschichtung der Würfeloberfläche zur Hydrophobierung und Verbesserung der Dispergierung erhält man dabei annähernd kugelsymmetrische Füllstoffpartikel, auf die die Suspensionstheorie anwendbar ist.

Zur Bestimmung der Viskosität wurde ein Rotationsviskosimeter der Fa. Haake, Modell VT 500, mit einem Meßkopf SV2 nach DIN 53018 bei Raumtemperatur verwendet. Die tabellarisch festgehaltenen Zähigkeitswerte wurden bei einem Schergefälle von 12.3 l/sec aufgenommen. Der nachfolgenden Tabelle I sind die Meßdaten sowohl der A-Komponente, der B-Komponente sowie einer Kabelvergußmasse in einem Gewichtsverhältnis von 3:1 zu entnehmen:

Tabelle I

| | Komp. A | Komp. B | Vergussmasse nach dem Mischen | Meßmethode |
|---|---|---|---|---|
| Dichte (g/cm$^3$) | 1,36 | 0,94 | 1,22 | volumetrisch |
| Viskosität (Pas) | 4,4 | 3,7 | 6,0 | DIN 53018 |
| Durchschlagsfestigkeit (kV/mm) | > 10 | > 10 | >10 | VDE 0370 |
| Berechnete Dichte (g/cm$^3$) | 1,36 | 0,928 | 1,215 | ---- |
| Gelier-/Topfzeit (min) bei RT | ---- | ---- | ca. 10 | Vergußversuche |
| Gelier-/Topfzeit (min) bei + 5°C | ---- | ---- | 30 | " |
| Gelier-/Topfzeit (min) bei + 35°C | ---- | ---- | < 10 | " |
| Durchvernetzung bei RT | ---- | ---- | 1 - 2 Tage | " |
| Durchvernetzung bei + 5°C | ---- | ---- | 5 Tage | " |
| Durchvernetzung bei +35°C | ---- | ---- | 1 -2 Tage | " |

Die erfindungsgemäße Kabelvergußmasse eignet sich insbesondere als Füllmasse, die zum Füllen von Kabelzubehören und bei Kabelverbindungsmuffen bzw. Hausanschlußmuffen für erdverlegte Starkstromkabel mit Nennspannungen von 1 kV benötigt werden, zum Füllen der Innenräume von Zubehörteilen, von Anschlußmuffen, Spulenkästen, Endverschlüssen, zum Abdichten der Kabelseelen der nicht längswasserdichten Kabel, als Vergußmaterial im Elektronikbereich sowie zum Füllen des Raumes zwischen Innenmuffen und Schutzmuffen für Starkstromkabel mit Bleimetallmantel.

## Patentansprüche

1. In Wärme und/oder Kälte vernetzbare Zwei-Komponenten-Kabelvergußmasse mit zumindest einer Bindemittelkomponente und einer Füllstoffkomponente,
   **dadurch gekennzeichnet, daß**
   die vernetzte Kabelvergußmasse das Reaktionsprodukt einer A-Komponente aus 15 bis 25 Gew.-% eines Streckmittels von niedrig-viskosen, nicht-hygroskopischen Mineralölen, 21 bis 29 Gew.-% eines hydroxylfunktionalisierten Polybutadiens mit einem Molekulargewicht (Mn) von 2600 bis 3200 und einer Iodzahl von 400 bis 600 als Bindemittel, 46 bis 58 Gew.-% eines aus Oxiden, Hydroxiden und Carbonaten der Erdalkalimetalle ausgewählten Füllstoffes, und 0,65 bis 1,3 Gew.-% eines organischen Titanats als Vernetzer mit einer B-Komponente aus 7,5 bis 15 Gew.-% eines Streckmittels von niedrig-viskosen, nicht-hygroskopischen Mineralölen, 85 bis 95 Gew.-% eines carboxylfunktionalisierten Polybutadiens als Bindemittel und 0,05 bis 1,6 Gew.-% einer Farbpaste ist.

2. Kabelvergußmasse nach Anspruch 1,
   **dadurch gekennzeichnet, daß**
   das Mischverhältnis der A-Komponente zur B-Komponente im wesentlichen 3:1 ist.

3. Verwendung einer Kabelvergußmasse nach einem der Ansprüche 1 oder 2 als Füllmasse zum Füllen von Kabelzubehören, Kabelverbindungen und elektronischen Baugruppen.

## Claims

1. Heat and/or cold cross-linkable two component cable sealing mass linkable with at least one binding component and one filler component
   **characterised in that**
   the cross-linked cable sealing mass is the reaction product of an A component comprising 14 to 25 weight-% of an extender consisting of non-hygroscopic low viscous mineral oils, 21 to 29 weight-% of a hydroxy functional polybutadiene as binding agent with a molecular weight (Mn) of 2600 to 3200 and an iodine number of 400 to 600, 46 to 58 weight-% of a filler selected from oxides, hydroxides, and carbonates of the alkaline earth metals, and 0.65 to 1.3 weight-% of an organic titanate as crosslinking agent with a B component comprising 7.5 to 15 weight-% of an extender consisting of non-hygroskopic low viscous minerals oils, 85 to 95 weight-% of a carboxyl functional polybutadiene as binding agent and 0.05 to 1.6 weight-% of a colour paste.

2. Cable sealing mass according to claim 1,
   **characterised in that**
   the mixing ratio of the A component to the B component is substantially 3:1.

3. Use of a cable sealing mass according to one of claims 1 or 2 as filling compound for the filling of cable accessories, cable junctions and electronic componentries.


**Revendications**

1. Mélange isolant pour câbles à deux composants réticulable à chaud et/ou à froid, comprenant au moins un composant de liant et un composant de matière de charge, caractérisé en ce que le mélange isolant pour câbles à l'état réticulé est le produit réactionnel d'un composant A constitué, à concurrence de 15 à 25 % en poids, par un diluant d'huiles minérales non hygroscopiques peu visqueuses, à concurrence de 21 à 29 % en poids par un polybutadiène à fonctionnalité hydroxyle possédant un poids moléculaire (Mn) de 2600 à 3200 et un indice d'iode de 400 à 600 à titre de liant, à concurrence de 46 à 58 % en poids, par une matière de charge choisie parmi le groupe comprenant des oxydes, des hydroxydes et des carbonates de métaux alcalino-terreux, et à concurrence de 0,65 à 1,3 % en poids, par un titanate organique à titre d'agent de réticulation, avec un composant B constitué, à concurrence de 7,5 à 15 % en poids, par un diluant d'huiles minérales non hygroscopiques peu visqueuses, à concurrence de 85 à 95 % en poids par un polybutadiène à fonctionnalité carboxyle à titre de liant et, à concurrence de 0,05 à 1,6 % en poids, par une pâte d'impression.

2. Mélange isolant pour câbles selon la revendication 1, caractérisé en ce que le rapport de mélange du composant A au composant B s'élève essentiellement à 3:1.

3. Utilisation d'un mélange isolant pour câbles selon l'une quelconque des revendications 1 ou 2 comme matière de charge pour le remplissage d'accessoires pour câbles, de raccords de câbles et d'assemblages de circuits électroniques.